# EUROPEAN PATENT SPECIFICATION

(11) **EP 3 854 684 B1**
(45) Date of publication and mention of the grant of the patent: **22.10.2025**
(21) Application number: 18934034.2
(22) Date of filing: 18.09.2018
(51) Int. Cl.: G08G 5/26, G08G 5/52, G08G 5/55, G08G 5/21, G08G 5/57

(54) **UNMANNED AIRCRAFT OPERATING CONTROL SYSTEM AND METHOD**
SYSTEM UND VERFAHREN ZUR STEUERUNG DES BETRIEBS EINES UNBEMANNTEN FLUGZEUGS
SYSTÈME ET PROCÉDÉ DE COMMANDE OPÉRATIONNELLE D'UN AÉRONEF SANS PILOTE

(43) Date of publication of application: 28.07.2021
(73) Proprietor: Arborea Intellbird S.L., 37185 Villamayor (Salamanca) (ES)
(72) Inventor: BERNABEU GONZALEZ, Carlos, 37185 VILLAMAYOR (ES); GONZALEZ HERNANDEZ, Aaron, 37185 VILLAMAYOR (ES)
(74) Representative: Hernández Hernández, Carlos
(86) International application number: PCT/ES2018/070607
(87) International publication number: WO 2020/058535

(56) References cited:
- WO-A1-2016/154941
- WO-A1-2016/154941
- WO-A1-2018/161338
- WO-A1-2018/161338
- US-A1- 2004 249 519
- US-A1- 2017 364 065
- US-A1- 2017 372 617
- US-A1- 2018 141 676
- US-A1- 2018 141 676

## Description

### Technical field

The invention relates to techniques for regulating the flight of an unmanned aircraft and more specifically to a system that comprises means to lock the aircraft, preventing its operation where a take-off clearance has not been requested or where it has been refused. The invention also refers to a method whose implementation makes use of the claimed system and which comprises a clearance request step and an execution step.

### Background of the invention

The constant development of unmanned aircrafts (also known as Unmanned Aerial Vehicles UAV, including autonomous aircrafts and remotely piloted aircrafts) technology has led to an ever-increasing use of these devices, both for leisure and for professional purposes, such as surveillance, infrastructure testing or transportation. Flying of UAVs poses serious safety risks, as they can interfere with civilian or military aircrafts, intrude into military installations or strategic infrastructures, collide with buildings or telecommunication antennae, or crash into populated areas. Accordingly, governments have enacted a wide range of regulations defining restricted fly areas and subjecting UAV operation to strict requirements and heavy liabilities, such as hefty fines or even criminal responsibility for the management of the operating company. However, it is difficult for a flying operator to be aware of all restrictions that apply to a specific flight since, for instance, the air traffic control authority may have issued a NOTAM (Notice to Airmen) establishing a restriction due to a sporting event.

In response to this, a variety of technical solutions have been developed aiming at facilitating operators' compliance with the applicable legal requirements and to ensure a safe fly. Some techniques need the preinstallation of costly infrastructures such a transponder network, requiring the intervention of the public authorities. Others are based on geofencing, presenting the problem that due to a lack of updating recently issued NOTAMs may not have been taken into account. Other known systems are based on interfering with the aircraft's GPS, forcing the aircraft to land in certain situations.

Some patent documents disclose systems or methods for planning routes that take into account the obstacles to be encountered by the flying device, such as buildings or restricted areas. In WO2016154551A1 (MATTERNET INC et al) 29 September 2016, "Route planning for unmanned aerial vehicles", a processor, after receiving both a route request for a UAV and geospatial information (comprising obstacles associated with the origin and destination locations) determines a route which is communicated to the UAV through wireless communication. Another example in this line is US2012158280A1 (BOEING CO) 21 June 2012, "Computing route plans for routing around obstacles having spatial and temporal dimensions", where a route for a flying vehicle is defined through a graph by calculating a trajectory between a first destination and a second destination, and so on, adding the destinations to the route when the trajectory is not intersecting an obstacle such as restricted airspace.

Some other documents are concerned with diverting the flying device when it approaches or has entered an obstacle, such a restricted fly area. Thus, US2004249519A1 (FRINK BENTLEY D.) 12 September 2004, "System and methods for preventing unauthorized use of aircraft" refers to an aircraft having a memory loaded with geolocation data which corresponds to restricted airspace boundaries. Where the aircraft approaches within a predetermined distance from the restricted area, it is rerouted by a flight computer. US2016240087A1 (AEROBOTICS INNOVATION LLC) 18 August 2016, "System and method or preventing and remedying restricted area intrusions by unmanned aerial vehicles", describes a system comprising a restricted area aggregator (16) and a UAV controller (14a) including an intrusion prevention module that determines whether the UAV is currently intruded within a restricted area.

Yet another set of patent documents refers to obtaining flying permission for an UAV. In KR20160074897A1 (KOREA ELECTRONICS TECHNOLOGY INST) 29 June 2016, "Method and apparatus for allowing right of flight of drone" a drone control device receives a request signal for a given route during a given time. A processor grants or denies the permission according to existence of restricted areas or UAV flying prohibitions. Also, the route can be automatically adjusted to avoid congested areas. However, the apparatus does not include any device envisaged to prevent the UAV from actually flying in the event that permission is refused.

WO2017084031A1 (SZ DJI TECHNOLOGY CO LTD) 26 May 2017, "System and methods for managing fly restrictions regions" discloses a method based on UAV identity information or user identity information. The method comprises assessing whether the location of the UAV falls within flight restriction regions, obtaining a request for the UAV to fly within a restricted region, prior to granting or denying permission to fly within such region. The request can be made in advance prior to the UAV flying towards the flight restricted region. The request may comprise an identification of a proposed flight plan or fly area for unlocking. The identity of the UAV or its user is authenticated prior to granting or denying permission. The granting or denying of permission generates one or more flight response measures. These measures may govern whether take-off is allowed. However, the method does not comprise sending an encoded file from a remote web application to a software used by the flight operator. And it does not comprise means for locking the UAV that work as claimed by this patent.

US 2018/0141676 A1 (SUZUKI et al) 24 May 2018, "Safety management system for aircraft" discloses a safety device that can be fitted to an aircraft and is capable of changing, at a motor controller, a power feeding amount to each drive unit based on the result of authentication procedures, said procedures not involving any communication emitted by the safety management device directed to a user's terminal. US 2017/0364065 A1 (PETRUZZELLI) "Unmanned aerial vehicle transponder systems with integrated disablement" is based on transponder technology and teaches various systems and methods for disabling UAVs, comprising a disablement procedure module that in certain situations may receive a disablement message from a management system, severing control from the pilot. No communication between the module and any computing device handled by the pilot is envisaged. WO 2018/161338 A1 (SZ DJI TECHNOLOGY CO LTD), 13 September 2018, "Methods and systems for supporting flight restriction of unmanned aerial vehicles" and WO 2016/154941 A1 (SZ DJI TECHNOLOGY CO LTD), 6 October 2016, "Systems and methods for displaying geofencing device information" are based respectively on generating flight restrictions and in geofencing, none of them disclosing any means or method to prevent an aircraft from taking off based on the result of previous clearance and of communications between a device fitted to the aircraft and a computing device of the pilot's.

### Summary of invention

The aim of this invention is to provide an unmanned aircraft (UAV) operating control system and method which, making use of easy-to-install locking means, prevent the UAV from taking off if such flight is not permitted due to circumstances relating to the place and time in which the flight would be performed, or due to specific situations relating to the flight operator or the aircraft. In this patent, the term "flight operator" may designate a pilot, that is, the person in charge of handling a remotely piloted UAV or a group of UAVs in interconnected flight (UAV swarm). "Flight operator" may also designate the natural person or legal person which is responsible for a UAV (or a swarm) in autonomous flight. In this patent the terms "UAV" and "aircraft" are equivalent and designate both remotely piloted aircrafts and autonomous flight aircrafts (unless express reference is made to one or the other type) as well as an aircraft swarm, which for these purposes must be treated as a single aircraft.

In a first aspect, the invention relates to an unmanned aircraft operating control system according to appended claim 1. The system comprises a software and a web application. In one example not covered by the presently claimed invention, the software is a mobile device application handled by the flight operator. The mobile device application has been designed to run on mobile telecommunication devices such as a smartphone, tablet, laptop or any other portable device permitting a telematic communication, including via Wifi. The mobile telecommunication device must feature a positioning system by satellite or other technology.

According to the presently claimed invention, the software is divided in two parts: on the one hand, a software, which can likewise be a mobile application, or it can be stored in a non-portable personal computer or in an intranet server) used in all cases by the flight operator and capable of telematic communication (a positioning system not being required). The other part is a software stored in a microprocessor, the microprocessor being integrated in a fixed telecommunication device located in the proximity of the aircraft, in particular according to the presently claimed invention such location being the take-off and landing base (known as nest) of the autonomous aircraft, such software being capable of radio communication with the aircraft.

"Web application" must be understood as a software which is used by accessing a web server through internet or an intranet. The web application is hosted in a remote computing device, in the sense that said remote device is different from the device where the software handled by the flight operator or stored in a microprocessor is stored. Typically, the web application will be under the control of a person other that the user of the software, for instance, a private company providing a UAV's operating control service or a public agency responsible for air traffic control. The person having the web application under his control is referred in this patent as "service manager". The software and the web application are interconnected, the user of the software being able to access the web application through a mobile telecommunications device or through a browser.

The system comprises means to lock the aircraft installed in the aircraft between its power supply and its flight control devices. "Means to lock the aircraft" must be understood as the means that prevent the aircraft from taking-off. The means to lock the aircraft are configured to send a validation request to the computing device and to unlock the aircraft after receiving a validation message from the computing device. In one embodiment, the means to lock the aircraft comprise a printed circuit board (1), also referred in this patent as "electronic board", powered by the battery of the UAV and switching on when the UAV starts up. The board (1) comprises computing devices equipped with a programmable memory and capable of executing instructions received through communications ports or stored in its memory. In one embodiment, said computing devices comprise a microcontroller (3).

In a first moment, that takes place when the aircraft starts up and accordingly the microcontroller (3) is switched on, the microcontroller (3) transmits instructions to means for interrupting the power supply (7, 9), with the effect that the aircraft's take-off is prevented. By "means for interrupting the power supply" is understood any device which, constituting an integral part of the means to lock the aircraft (1), possesses the capability of interrupting and resuming the power transmission to the means of control of the aircraft. By "means of control of the aircraft" is understood any of its devices which are necessary to control the aircraft and whose stoppage prevents the aircraft from taking-off.

In a second moment, the aircraft being locked, the microcontroller (3), after communicating via radio with the software, and depending on the result of such communication, may send instructions to the means for interrupting the power supply (7, 9). If such instructions are sent, the effect will be the unlocking of the aircraft.

After unlocking the aircraft, the means to lock the aircraft (1) will be disabled, so there will not be any chance of an in-flight accidental intervention of the means to lock the aircraft (1).

In a second aspect, the invention relates to an unmanned aircraft operating control method according to appended claim 2. Said method generally comprises two steps: clearance and execution. The clearance step begins at the request of the flight operator, its end being to obtain a positive clearance. During this step, the method is performed through telematic communication between the software and the web application. First there is a clearance request, including indications about space and time in which the flight is intended. This step goes on with the processing of the request by the application web and ends with sending an encoded file to the software. The contents of the encoded file comprise one type of clearance response (positive or negative), and space-time coordinates.

The execution step is based on the interaction between the software and the means to lock the aircraft (1) on board the UAV, without any intervention of the application web. The aircraft must be located within the spatial and temporal range in respect of which clearance was requested. Upon starting up the aircraft, and by the intervention of the means to lock the aircraft (1), the aircraft will not be able to take off. Depending on the contents of the encoded file, i.e. whether or not a positive clearance response has been issued, and depending also on whether or not the aircraft is within the space and temporal range in respect of which clearance was requested, the aircraft will either be able to take off or will be unable to do so.

### Brief description of drawings

FIG. 1: Components of the electronic board, on one side.
FIG. 2: Components of the electronic board, on the other side.
FIG. 3: Diagram representing the clearance step of the method.
FIG. 4: Diagram representing the execution step of the method, according to an example not covered by the presently claimed invention.

### Description of embodiments

In a first aspect, the invention refers to an unmanned aircraft operating control system according to appended claim 1. Among other things, the following elements intervene in said system: a) a-computing device hosting a software, the computing device selected from a group comprising: a mobile telecommunication device handled by a flight operator; a non-portable personal computer handled by a flight operator; an intranet server handled by a flight operator; and a microprocessor integrated in a fixed device located in the proximity of the unmanned aircraft; b) a web application, hosted in a remote computing device. The web application is accessible by means of the software, because they are interconnected; and c) means to lock the aircraft installed in the UAV, said means comprising an electronic board (1).

In a first example not covered by the presently claimed invention, and primarily applicable to the operating control of remotely piloted aircrafts, the software is a mobile device application, hosted in a mobile telecommunications device, for instance, a smartphone, which is in possession of the pilot. This example is not encompassed by the wording of the claims, but it is considered as useful for understanding the invention. In an embodiment of the presently claimed invention, primarily applicable to the operating control of autonomous flight aircrafts, the software has two parts: one is stored in a non-portable personal computer with telematic communication capacity. And the other part consists of a software stored in a microprocessor which is integrated in a nest. The microprocessor can communicate via radio with the aircraft. The other two components of the system, that is, the web application and the means to lock the aircraft, are the same irrespective of their use in connection with remotely piloted or autonomous flight aircrafts.

The web application which forms an integral part of the system has the capacity to receive in real time by telematic means information from external sources, for instance, NOTAMs, particularly from State air traffic security agencies, control towers and weather stations. The web application includes a computing database containing at least two kinds of data: a) relating to the identify of operators and aircrafts registered with the service manager, and b) relating to legal requirements applicable to UAVs' flight in the territory under responsibility of the service manager, such as aeronautic qualifications and certifications in possession of the flight operators registered with the service manager and flight prohibitions or restrictions applicable within said territory.

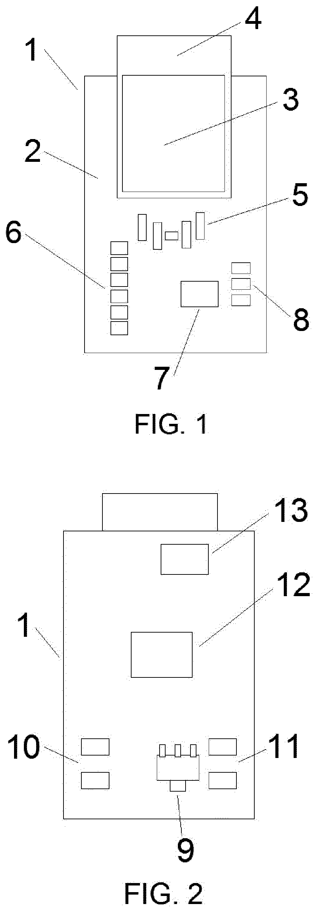

The means to lock the aircraft comprise a board, which in a preferred embodiment is a printed circuit board (1) which as shown in FIG. 1 comprises, on a base (2) of any material known in the art, the following elements in one of its sides: computing devices, specifically a microcontroller (programmable logic device) (3) with at least one core processor, preferably of 32 bits and a low power coprocessor. The microcontroller has integrated communication ports (4) for communications via Wifi and Wireless Personal Area Network according to Bluetooth^{®} standard or other radio communication systems. The microcontroller (3) is programmed using components (5) known in the art, through a programming port (6). Lastly, in this side of the board (1) there are means for interrupting the power supply, specifically an optocoupler (7) with its associated output port (8).

In the opposite side, as shown in FIG. 2, the printed circuit board (1) comprises other means for interrupting the power supply, namely a solid-state relay (9) with associated input (10) and output (11) ports.

The solid-state relay (9) switches off the power to the aircraft's peripheric devices, such as the inertial measurement unit (IMU), the main control board or the radio receiver. The optocoupler (7) disables the internal electrical voltage regulators, preventing the power supply to the different peripherical devices of the aircraft's main control board. With respect to these means for interrupting the power supply, the electronic board (1) can have two configurations: one in which both the optocoupler (7) and the solid state relay (9) are operative, and another one in which only one of them is functioning while the other is not. The expert may select one configuration or the other depending on the technical features of the aircraft in which the electronic board (1) is to be installed.

Finally, the electronic board (1) comprises means to provide power to the board, namely an integrated switched-mode power supply (12), connected to the aircraft's battery by means of a supply port (13).

The electronic board (1) can be installed to any UAV, either a remotely piloted or an autonomous flight aircraft. It is not necessary that the electronic board (1) is installed at the factory or that the UAV features any element designed for eventually fitting it. Installation of the electronic board (1) only requires making the connections between certain components of the board (1) and certain components of the UAV, plus programming the microcontroller's (3) firmware, the expert in the art being able to perform these operations in view of the foregoing description.

In a second aspect, the invention refers to an unmanned aircraft operating control method, which is implemented using the system which has been described.

In order to implement the method, the flight operator must be registered on the web application's database. If the operator is a pilot, the registration will be subject to compliance with the applicable requirements concerning qualification as pilot and any other legal requirements. Likewise, the UAV to be used in the operation in respect of which clearance is requested must have been registered on said database, compliance with airworthiness and other requirements being necessary to this end. Where an operator is registered, a password is issued. Where an aircraft or a swarm of aircrafts are registered, an identification code is assigned. An operator's password is not associated to any specific aircraft's identification code. Thus, particularly in the case of companies operating an aircraft fleet, the operators will be able to choose any aircraft from the fleet to carry out a requested flight.

The method comprises two main steps: clearance and execution. Clearance is performed in the same way irrespective of the method being performed with a remotely piloted or an autonomous flight UAV. The execution step is different depending on the type of aircraft.

The clearance step must begin with anticipation to the moment foreseen to commence the flight. This step must be performed in an environment within mobile phone network or Wi-Fi range, because it needs communication via web between the software and the web application.

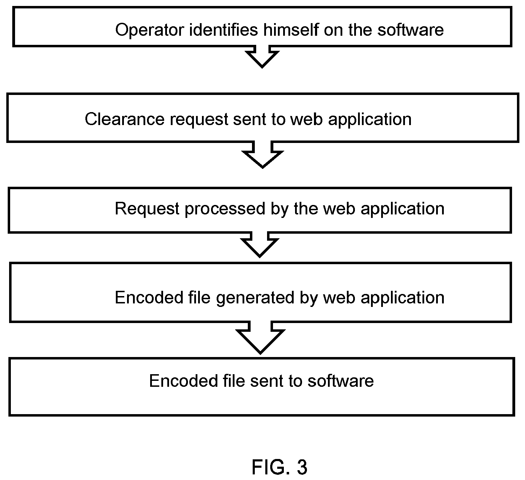

FIG. 3 shows a flow chart of the different sub steps comprised in this step of the method: 1) Identification of the operator, using the issued password. 2) Clearance request, entering the information requested by the software interface, comprising space indications (geographical area of flight and maximum elevation), time (range of dates to carry out the flight, starting time and estimated length) and type of operation (for instance, powerline inspection). This information is telematically transmitted to the web application. 3) Processing by the web application of the information provided by the operator, comprising cross-checking it against the information received in real time from external sources, primarily with NOTAMs issued by the competent authorities and against the information stored in the web application's database. 4) Generating by the web application of an encoded file, whose content comprises two blocks.

The first block specifies one type of clearance, which can be: a) positive clearance, with two subtypes: a.1) unconditional with respect to the requested flight parameters, and a.2) limited with respect to the requested flight parameters, for instance, with a lower range of dates, or at a lower elevation; b) negative clearance result, with two subtypes: b.1) absolute, and b.2) revocable, if the deficiencies are corrected (for instance, applicant needs to obtain a flight permit to overfly a National Park), which would generate a new answer consisting of a positive clearance.

In the second block, the encoded file contains space-time coordinates referring to the geographical and time range in respect of which a positive clearance has been granted. If the clearance has been negative, the encoded file will not contain such second block.

The encoded file is stored in the software handled by the flight operator and can be checked by the operator at all times. This way, the operator will know which type of clearance has been issued and if something needs to be corrected. This can avoid unnecessary travelling to the starting point of the desired flight.

Concerning the second step of the mentioned method, that is, the execution step, two alternative methods will be described. In the first example method, not covered by the presently claimed invention, and applicable to the operating control of a remotely piloted aircraft, the flight operator is a pilot. The software is a mobile application downloaded in a smartphone in the possession of the pilot. As previously said, this first example method is not encompassed by the wording of the claims.

In said first example method, the pilot must place himself, with the registered aircraft that he intends to use in the operation, in a point within the space range in respect of which clearance was requested and at an authorized time. As this stage is based on the radio communication between the mobile application and the electronic board (1), it can be performed in areas out of mobile phone or Wi-Fi range.

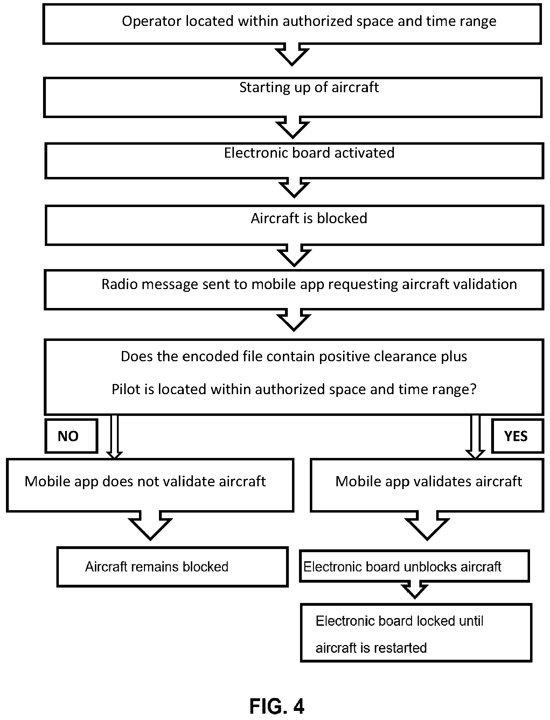

Still according to said first example method not covered by the presently claimed invention, the execution step comprises the following sub steps, as shown in FIG. 4 flow chart: 1) Starting up the aircraft, an action which activates the electronic board (1). In this moment, by the interaction of said board (1) with the aircraft's components, the aircraft will be unable to fly. 2) Said action causes the electronic board (1) to automatically send, via radio communication, a message to the mobile application, said message containing the aircraft's identification code and a request to the pilot to validate the aircraft, that is, to confirm that such aircraft, identified with a code shown in the screen, is the one to be used in that flight operation. If, within the range of the communication system, several registered aircrafts were started up in a close interval, each pilot's mobile application would receive validation requests in respect of all of them, hence that, as a security measure, the pilot must validate the specific aircraft under his charge. 3) Aircraft validation is effected by a validation message, sent via radio by the mobile application to the electronic board (1), reception of which causes the unlocking of the aircraft, enabling it to fly.

The actual sending of the validation message by the mobile application is subject to two conditions, which are simultaneously verified by the mobile application through the execution of the encoded file: a) that the type of clearance contained in the encoded filed is positive; and b) that the validation message is sent from the mobile application from a space point and at a time comprised in the range of space-time coordinates contained in the encoded file, which implies that the pilot is physically located, with the aircraft, within said area. This fact is checked by the application by crossing the space-time coordinates contained in the encoded file with the same type of coordinates obtained by the positioning system of the pilot's mobile device.

Where the clearance contained in the encoded file is negative, the mobile device application will not send the validation message to the aircraft's electronic board (1): thus, even if the pilot -which was or could have been aware, when he received the encoded file, that a positive clearance had not been granted - tries to fly the UAV and therefore answers the validation request issued by the electronic board (1), the validation message will not be sent by the pilot's mobile application. In such an event, a warning that there is no positive clearance for that flight will show in screen. The same warning will be generated if the pilot attempts to validate the aircraft outside the authorized space or time range. In this way, the aircraft can only be operated by an authorized person which is located within the permitted space and time range.

A second alternative method of the execution stage is applicable to the operating control of autonomous flight aircraft, according to the presently claimed invention. It is performed with a system comprising a software which is divided in two parts: one part is stored in a computer the user of which is the flight operator, and the other part in a microprocessor integrated in an aircraft's nest.

This stage of the claimed method is substantially the same as in the first example method, so only the differences will be described hereinafter. The basic difference is that the encoded file is sent from the web application both to the computer used by the flight operator and to the microprocessor integrated in the nest. The first file allows the operator to know if the clearance is positive or negative, so that, if applicable, the necessary corrections or planning can be made. The second encoded file is the one actually intervening in the performance of the method. Thus, once the autonomous flight aircraft starts up at the programmed time, and the electronic board (1) is activated (preventing the aircraft from flying), the electronic board (1) in the aircraft will send the validation request to the software stored in the microprocessor located in the nest. Therefore, the encoded file will be executed by the software stored in the microprocessor, that will check if the two above-mentioned conditions are met (positive clearance and aircraft located within authorized space and time range). If so, this microprocessor will send the validation message via radio to the electronic board (1), reception of which will unlock the aircraft.

Having described the system and method, it is hereinafter explained how the electronic board (1) intervenes in the performance of the method, such intervention being the same regardless that the method is performed with remotely piloted or with autonomous flight aircrafts. When the aircraft starts up, the switched-mode power supply (12) takes its power from the aircraft's battery through its supply port (13), switches on the microcontroller (3) and enables the means to lock the aircraft (1). Instantaneously, the microcontroller (3) enables the means for interrupting the power supply (7, 9), locking the aircraft, which will not be able to take off. This enablement of the interrupting means (7, 9) can be effected by direct or inverse logic. Almost simultaneously, the microcontroller (3) sends through its communication ports (4) a radio message to the software requesting validation of the aircraft. If and when the microcontroller (3) receives the validation message sent by the software, it will disable the means for interrupting the power supply (7, 9), thus unlocking the aircraft, which will enable it to take off. Immediately afterwards, the microcontroller (3) will lock itself and thus, the means to lock the aircraft (1) will be disabled. The aircraft will fly without any interference from the means to lock the aircraft (1), avoiding any risk of in-flight locking of the aircraft. To restart the microcontroller (3) it is necessary to restart the aircraft, which requires disconnecting its battery.

## Claims

1. An unmanned aircraft operating control system, comprising:
an unmanned aircraft comprising a power supply, flight control devices and blocking means capable of preventing the unmanned aircraft from take-off, said blocking means installed in the unmanned aircraft between the power supply and the flight control devices;
a remote computing device hosting a web application;
a first part of a proximal software configured to be handled by a flight operator, the first part capable of telematic communication with the remote computing device, the first part selected from a group comprising:
a mobile app;
a software stored in a non-portable personal computer;
a software stored in an intranet server;
a take-off and landing base for the unmanned aircraft, the take-off and landing base located in a proximity of the unmanned aircraft and comprising a fixed telecommunication device comprising a microprocessor, the microprocessor comprising a second part of the proximal software, the second part capable of radio communication with the unmanned aircraft and capable of telematic communication with the remote computing device;
whereby the web application is configured to send an encoded file to the first part and the same encoded file to the second part, the encoded file containing a positive or negative clearance and, in case of a positive clearance, space-time coordinates referring to a geographical and time range in respect of which the positive clearance has been granted.

2. Unmanned aircraft operating control method for autonomous flights of an unmanned aircraft,
whereby the unmanned aircraft comprises a power supply, flight control devices and blocking means capable of preventing the unmanned aircraft from take-off, said blocking means installed in the unmanned aircraft between the power supply and the flight control devices,
the unmanned aircraft operating control method comprising the steps of:
a) Registering of a flight operator on a web application hosted by a remote computing device;
b) Issuing of a password from the web application to the flight operator;
c) Identifying of the flight operator, using the issued password, on a first part of a proximal software configured to be handled by the flight operator, the first part capable of radio communication with the unmanned aircraft and capable of telematic communication with the remote computing device, the first part selected from a group comprising:
a mobile app;
a software stored in a non-portable personal computer;
a software stored in an intranet server;
d) Sending a clearance request, by the flight operator, from the first part to the web application;
e) Processing, by the web application, of the clearance request;
f) Generating, by the web application, an encoded file, the encoded file containing a positive or negative clearance and, in case of a positive clearance, space-time coordinates referring to a geographical and time range in respect of which the positive clearance has been granted;
g) Sending, by the web application, the same encoded file to the first part of the proximal software, and to a second part of the proximal software stored in a microprocessor comprised in a fixed telecommunication device of a take-off and landing base for the unmanned aircraft, the take-off and landing base located in a proximity of the unmanned aircraft, the second part capable of radio communication with the unmanned aircraft and capable of telematic communication with the remote computing device.

3. The unmanned aircraft operating control method of claim 2, further comprising the step of sending a validation request from the blocking means to the microprocessor integrated in the take-off and landing base of the unmanned aircraft.

4. The unmanned aircraft operating control method of claim 3, further comprising the step of sending a validation message from the microprocessor integrated in the take-off and landing base of the unmanned aircraft to the blocking means installed in the aircraft, the validation message disabling interrupting means of the blocking means.

5. The unmanned aircraft operating control method of claim 3, whereby the validation message is sent only if the unmanned aircraft is located within the space-time coordinates contained in the encoded file, and only if the clearance contained in the encoded file is positive.

## Patentansprüche

1. Ein System zur Steuerung unbemannter Luftfahrzeuge, bestehend aus:
einem unbemannten Luftfahrzeug, das eine Stromversorgung, Flugsteuerungseinrichtungen und Sperrvorrichtungen umfasst, die den Start des unbemannten Luftfahrzeugs verhindern können, wobei die Sperrvorrichtungen im unbemannten Luftfahrzeug zwischen der Stromversorgung und den Flugsteuerungseinrichtungen installiert sind;
einem entfernten Rechengerät, auf dem eine Webanwendung gehostet wird;
einem ersten Teil einer proximalen Software, die so konfiguriert ist, dass sie von einem Flugoperator bedient werden kann, wobei der erste Teil zur telematischen Kommunikation mit dem entfernten Rechengerät fähig ist und aus einer Gruppe ausgewählt wird, die Folgendes umfasst:
eine mobile App;
eine Software, die auf einem nicht tragbaren PC gespeichert ist;
eine Software, die auf einem Intranet-Server gespeichert ist;
eine Start- und Landebasis für das unbemannte Luftfahrzeug, wobei sich die Start- und Landebasis in der Nähe des unbemannten Luftfahrzeugs befindet und eine fest installierte Telekommunikationsvorrichtung mit einem Mikroprozessor umfasst, wobei der Mikroprozessor einen zweiten Teil der proximalen Software umfasst und der zweite Teil zur Funkkommunikation mit dem unbemannten Luftfahrzeug und zur telematischen Kommunikation mit dem entfernten Rechengerät fähig ist;
wobei die Webanwendung so konfiguriert ist, dass sie eine verschlüsselte Datei an den ersten Teil und dieselbe verschlüsselte Datei an den zweiten Teil sendet, wobei die verschlüsselte Datei eine positive oder negative Freigabe enthält, und im Falle einer positiven Freigabe Raum-Zeit-Koordinaten, die sich auf einen geografischen und zeitlichen Bereich beziehen, für den die positive Freigabe erteilt wurde.

2. Verfahren zur Steuerung unbemannter Luftfahrzeuge für autonome Flüge eines unbemannten Luftfahrzeugs,
wobei das unbemannte Luftfahrzeug eine Stromversorgung, Flugsteuerungseinrichtungen und Sperrvorrichtungen umfasst, die den Start des unbemannten Luftfahrzeugs verhindern können, wobei die Sperrvorrichtungen im unbemannten Luftfahrzeug zwischen der Stromversorgung und den Flugsteuerungseinrichtungen installiert sind, wobei das Verfahren zur Steuerung unbemannter Luftfahrzeuge die folgenden Schritte umfasst:
a) Registrierung eines Flugoperators in einer Webanwendung, die auf einem entfernten Rechengerät gehostet wird;
b) Ausgabe eines Passworts aus der Webanwendung an den Flugoperator;
c) Identifizierung des Flugoperators mithilfe des ausgegebenen Passworts in einem ersten Teil einer proximalen Software, die so konfiguriert ist, dass sie vom Flugoperator bedient werden kann, wobei der erste Teil zur Funkkommunikation mit dem unbemannten Luftfahrzeug und zur telematischen Kommunikation mit dem entfernten Rechengerät fähig ist und aus einer Gruppe ausgewählt wird, die Folgendes umfasst:
eine mobile App;
eine Software, die auf einem nicht tragbaren PC gespeichert ist;
eine Software, die auf einem Intranet-Server gespeichert ist;
d) Senden einer Freigabeanforderung durch den Flugoperator, und zwar vom ersten Teil an die Webanwendung;
e) Bearbeitung der Freigabeanforderung durch die Webanwendung;
f) Erzeugen einer verschlüsselten Datei durch die Webanwendung, wobei die verschlüsselte Datei eine positive oder negative Freigabe enthält, und im Falle einer positiven Freigabe Raum-Zeit-Koordinaten, die sich auf einen geografischen und zeitlichen Bereich beziehen, für den die positive Freigabe erteilt wurde;
g) Senden derselben verschlüsselten Datei durch die Webanwendung an den ersten Teil der proximalen Software und an einen zweiten Teil der proximalen Software, der in einem Mikroprozessor in einer fest installierten Telekommunikationsvorrichtung einer Start- und Landebasis für das unbemannte Luftfahrzeug gespeichert ist, wobei sich die Start- und Landebasis in der Nähe des unbemannten Luftfahrzeugs befindet und der zweite Teil zur Funkkommunikation mit dem unbemannten Luftfahrzeug und zur telematischen Kommunikation mit dem entfernten Rechengerät fähig ist.

3. Verfahren zur Steuerung unbemannter Luftfahrzeuge nach Anspruch 2, das ferner den Schritt umfasst, eine Validierungsanforderung von den Sperrvorrichtungen an den Mikroprozessor zu senden, der in der Start- und Landebasis des unbemannten Luftfahrzeugs integriert ist.

4. Verfahren zur Steuerung unbemannter Luftfahrzeuge nach Anspruch 3, das ferner den Schritt umfasst, eine Validierungsnachricht von dem in der Start- und Landebasis des unbemannten Luftfahrzeugs integrierten Mikroprozessor an die im Luftfahrzeug installierten Sperrvorrichtungen zu senden, wobei die Validierungsnachricht die Unterbrechungseinrichtung der Sperrvorrichtungen deaktiviert.

5. Verfahren zur Steuerung unbemannter Luftfahrzeuge nach Anspruch 3, wobei die Validierungsnachricht nur dann gesendet wird, wenn sich das unbemannte Luftfahrzeug innerhalb der in der verschlüsselten Datei enthaltenen Raum-Zeit-Koordinaten befindet und nur dann, wenn die in der verschlüsselten Datei enthaltene Freigabe positiv ist.

## Revendications

1. Système de contrôle de fonctionnement d'un aéronef sans pilote, comprenant :
un aéronef sans pilote comprenant une alimentation électrique, des dispositifs de contrôle de vol et des moyens de blocage capables d'empêcher le décollage de l'aéronef sans pilote, lesdits moyens de blocage étant installés dans l'aéronef sans pilote entre l'alimentation électrique et les dispositifs de contrôle de vol ;
un dispositif informatique distant hébergeant une application web ;
une première partie d'un logiciel proximal configuré pour être utilisé par un opérateur de vol, ladite première partie étant capable de communication télématique avec le dispositif informatique distant, la première partie étant sélectionnée dans un groupe comprenant :
une application mobile ;
un logiciel stocké dans un ordinateur personnel non portable ;
un logiciel stocké dans un serveur intranet ;
une base de décollage et d'atterrissage pour l'aéronef sans pilote, ladite base de décollage et d'atterrissage étant située à proximité de l'aéronef sans pilote et comprenant un dispositif de télécommunication fixe comprenant un microprocesseur, le microprocesseur comprenant une deuxième partie du logiciel proximal, ladite deuxième partie étant capable de communication radio avec l'aéronef sans pilote et de communication télématique avec le dispositif informatique distant ;
dans lequel l'application web est configurée pour envoyer un fichier encodé à la première partie et le même fichier encodé à la deuxième partie, le fichier encodé contenant une autorisation positive ou négative et, en cas d'autorisation positive, des coordonnées spatio-temporelles se rapportant à une zone géographique et à une plage temporelle pour lesquelles l'autorisation positive a été accordée.

2. Procédé de contrôle de fonctionnement d'un aéronef sans pilote pour des vols autonomes d'un aéronef sans pilote,
dans lequel l'aéronef sans pilote comprend une alimentation électrique, des dispositifs de contrôle de vol et des moyens de blocage capables d'empêcher le décollage de l'aéronef sans pilote, lesdits moyens de blocage étant installés dans l'aéronef sans pilote entre l'alimentation électrique et les dispositifs de contrôle de vol,
le procédé de contrôle de fonctionnement de l'aéronef sans pilote comprenant les étapes suivantes :
a) Enregistrement d'un opérateur de vol sur une application web hébergée par un dispositif informatique distant ;
b) Émission d'un mot de passe par l'application web à destination de l'opérateur de vol ;
c) Identification de l'opérateur de vol, à l'aide du mot de passe émis, sur une première partie d'un logiciel proximal configuré pour être utilisé par l'opérateur de vol, ladite première partie étant capable de communication radio avec l'aéronef sans pilote et de communication télématique avec le dispositif informatique distant, la première partie étant sélectionnée dans un groupe comprenant :
une application mobile ;
un logiciel stocké dans un ordinateur personnel non portable ;
un logiciel stocké dans un serveur intranet ;
d) Envoi, par l'opérateur de vol, d'une demande d'autorisation depuis la première partie vers l'application web ;
e) Traitement, par l'application web, de la demande d'autorisation ;
f) Génération, par l'application web, d'un fichier encodé, le fichier encodé contenant une autorisation positive ou négative et, en cas d'autorisation positive, des coordonnées spatio-temporelles se rapportant à une zone géographique et à une plage temporelle pour lesquelles l'autorisation positive a été accordée ;
g) Envoi, par l'application web, du même fichier encodé à la première partie du logiciel proximal et à une deuxième partie du logiciel proximal stockée dans un microprocesseur compris dans un dispositif de télécommunication fixe d'une base de décollage et d'atterrissage pour l'aéronef sans pilote, ladite base de décollage et d'atterrissage étant située à proximité de l'aéronef sans pilote, la deuxième partie étant capable de communication radio avec l'aéronef sans pilote et de communication télématique avec le dispositif informatique distant.

3. Le procédé de contrôle de fonctionnement d'un aéronef sans pilote selon la revendication 2, comprenant en outre l'étape consistant à envoyer une demande de validation depuis les moyens de blocage vers le microprocesseur intégré dans la base de décollage et d'atterrissage de l'aéronef sans pilote.

4. Le procédé de contrôle de fonctionnement d'un aéronef sans pilote selon la revendication 3, comprenant en outre l'étape consistant à envoyer un message de validation depuis le microprocesseur intégré dans la base de décollage et d'atterrissage de l'aéronef sans pilote vers les moyens de blocage installés dans l'aéronef, le message de validation désactivant les moyens d'interruption associés aux moyens de blocage.

5. Le procédé de contrôle de fonctionnement d'un aéronef sans pilote selon la revendication 3, dans lequel le message de validation est envoyé uniquement si l'aéronef sans pilote est situé à l'intérieur des coordonnées spatio-temporelles contenues dans le fichier encodé, et uniquement si l'autorisation contenue dans le fichier encodé est positive.
